# EUROPEAN PATENT SPECIFICATION

(11) **EP 2 062 024 B1**
(45) Date of publication and mention of the grant of the patent: **08.12.2010**
(21) Application number: 07813071.3
(22) Date of filing: 18.07.2007
(51) Int. Cl.: G01N 1/22

(54) **METHOD AND APPARATUS FOR MEASURING AND/OR CONTROLLING THE CONCENTRATION OF A GAS IN A SOLUTION**
VERFAHREN UND VORRICHTUNG ZUR MESSUNG UND/ODER STEUERUNG DER KONZENTRATION EINES GASES IN EINER LÖSUNG
MÉTHODE ET DISPOSITIF DE MESURE ET/OU DE RÉGULATION DE LA CONCENTRATION D'UN GAZ EN SOLUTION

(30) Priority: 27.07.2006 US 493986
(43) Date of publication of application: 27.05.2009
(73) Proprietor: Diversey, Inc., Sturtevant, WI 53177-0902 (US)
(72) Inventor: COUGHLIN, Michael F., Cincinnati, Ohio 45249 (US)
(74) Representative: van Heuvel, Margaretha
(86) International application number: PCT/US2007/073808
(87) International publication number: WO 2008/014165

(56) References cited:
- DE-A1- 3 701 727
- GB-A- 1 398 887
- US-A- 4 176 032
- US-B1- 6 286 375
- DUVAL M: "New techniques for dissolved gas-in-oil analysis" IEEE ELECTRICAL INSULATION MAGAZINE, IEEE SERVICE CENTER, NEW YORK, NY, US, vol. 19, no. 2, March 2003 (2003-03), pages 6-15, XP011096024 ISSN: 0883-7554

## Description

### BACKGROUND OF THE INVENTION

Water soluble gases are introduced to aqueous solutions for many reasons. For example, chlorine dioxide can be used in aqueous solutions for cleaning, disinfecting, sanitizing, and/or the like. For example, it can be used in carcass chillers, water treatment, clean-in-place systems, flume water, pulp processing, and the like. When using chlorine dioxide for these purposes, it is valuable to be able to measure and control the concentration of chlorine dioxide in the solution. Similarly, when other water soluble gases are introduced to a solution, it can be valuable to be able to measure the concentration of gas in the solution.

Many different devices can be used to directly measure chlorine dioxide in an aqueous solution. For example, probes can be used to directly measure chlorine dioxide in a solution via redox, selective ion, or amperometry. Furthermore, optical devices are also used to directly measure the amount of chlorine dioxide in a solution. However, these devices and methods of directly measuring the gas while in the solution are cumbersome and inherently inaccurate in their ability to measure the gas in the solution containing suspended solids, turbidity, or color. Specifically, the probes have pores that tend to plug in the presence of suspended solids, which render the probe response weakened or destroyed, and the optical devices generally cannot differentiate the gas from a changing background of color or turbidity.

GB 1398887 discloses an apparatus and method for removing gaseous impurities from air by contacting the air with a chemical reagent such as ozone, chlorine or chlorine dioxide for reacting with the gaseous impurities. Chlorine dioxide is liberated using a fine spray of a solution of chlorine dioxide in water which then is liberated as a gas.

Problems associated with measuring chlorine dioxide in solutions having suspended solids, turbidity, and/or color can be found in many applications. However, these problems are especially acute in fruit and vegetable flume water and chicken, beef, and other carcass chill water.

### SUMMARY OF THE INVENTION

The present invention relates to a device and method as defined in claims 1 and 6. The device and method are particularly useful when compared to the prior art when the solution contains suspended solids, turbidity, and/or color. However, the device and method disclosed herein are not limited to solutions having solids, turbidity, and/or color.

### BRIEF DESCRIPTION OF THE DRAWINGS

FIG. 1 is not representing the present invention.

FIG. 2 illustrates a gas separation or release device embodying the present invention. The gas separation device is shown coupled to a gas sensor or monitor.

### DETAILED DESCRIPTION

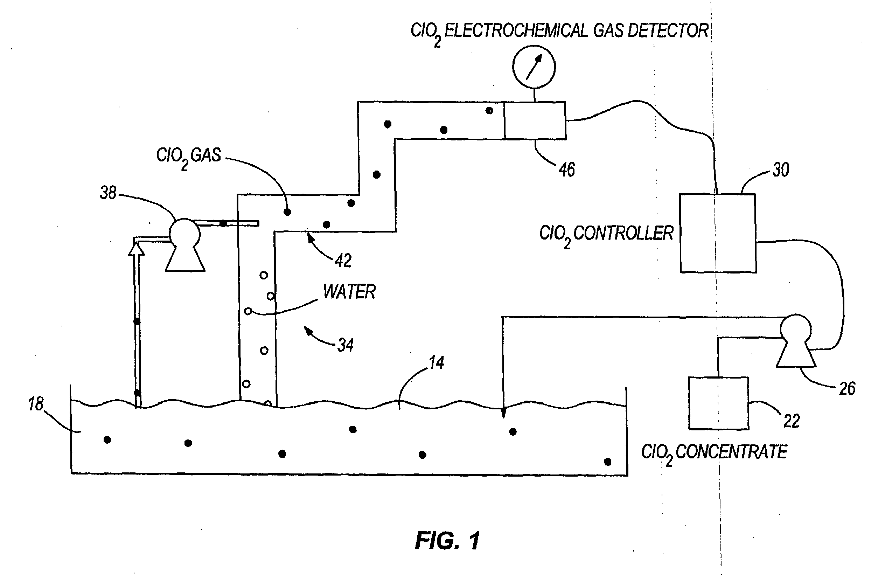

A device not within the scope of the present invention is shown in FIG. 1. This figure illustrates a device 34 for releasing a gas from an aqueous mixture and measuring the released gas. Additionally, as will be described in greater detail below, this also includes controller coupled to a reservoir of treatment chemical. Upon measuring the concentration of the released gas, the controller can determine whether the measurement is below a threshold value, and if so, add gas or treatment chemical to the solution.

In FIG. 1, a solution 14 is stored within a reservoir, tank, channel, sump, or other chamber 18. The solution 14 can have suspended solids, turbidity, and/or color due to its use with a meat chiller, such as a poultry chiller, a water treatment tank, part of a fruit and vegetable flume and wash water system, and the like. However, the water may be substantially clear, due to its use for other purposes.

The solution 14 within the reservoir 18 also contains chlorine dioxide. A source 22 of chlorine dioxide is coupled to the reservoir 18 or is in communication with the solution 14. Chlorine dioxide from the source 22 of chlorine dioxide can be selectively added to the reservoir 18 to maintain the concentration of chlorine dioxide within the solution 14. As illustrated, a pump 26 can be used to deliver the chlorine dioxide to the solution 14. However, other devices can be used to deliver the chlorine to the solution 14 within the reservoir 18, such as one or more valves controlling a pressurized source of chlorine dioxide.

A controller 30 is coupled to the pump 26 to selectively operate the pump to allow or cause chlorine dioxide to be added to the solution 14. The controller can be substantially any type of controller; however, a WebMaster controller (sold by Walchem Corp. of Holliston, MA, USA) has been found to work well. The controller generally causes the pump 26 to operate when the concentration of chlorine dioxide within the cleaning solution drops below a predetermined threshold value. The predetermined threshold value can have a variety of values depending upon the application of the solution, the load on the solution, the temperature of the solution, and the like.

The concentration of the chlorine dioxide within the solution is determined by causing chlorine dioxide to depart from the solution 14 and then measuring the concentration or amount of chlorine dioxide gas that departed from the solution 14. As illustrated, the device 34 includes a pump that draws the solution 14 from the reservoir 18 and sprays the solution 14 into a chamber 42, vessel, conduit, reservoir, or the like. This action of spraying the solution 14 into the chamber 42 renders the chlorine dioxide only partially soluble in the solution 14 and causes the chlorine dioxide to depart from the solution significantly in proportion to the amount of chlorine dioxide originally present in the solution 14. However, the evolution of chlorine dioxide depends upon the temperature, pressure, and volume. The chamber 42 is in communication with the solution reservoir 18 or has a flow path that directs solution 14 back to the reservoir 18. The chamber 42 is also coupled to or in communication with a chlorine dioxide gas monitor 46. In one embodiment, the gas monitor 46 is an electrochemical gas detector. The gas monitor 46 can be an iTX multi-gas monitor sold by Industrial Scientific Corp. of Oakdale, PA, USA. Or, the gas monitor 46 can be an iTrans gas monitor and transmitter also sold by Industrial Scientific Corp. The iTrans can be used in combination with a controller, as described below, to further control the concentration of gas within a solution.

The chamber 42 provides a convoluted or tortured pathway between the point where the solution is sprayed and the gas monitor 46. The convoluted pathway is defined by a series of elbows which act as water/gas baffle plates. However, other devices can be used to impede the solution from reaching the gas monitor 46.

The gas monitor 46 is coupled to the chlorine dioxide controller 30. Accordingly, the gas monitor 46 communicates the sensed concentration of chlorine dioxide to the controller 30, which then can compare the sensed concentration to predetermined threshold levels. If the concentration is below the threshold value, the controller 30 causes additional chlorine dioxide to be added to the solution 14.

The device shown in FIG. 1 operates as follows. The pump 38 draws solution 14 from the reservoir 18 and expels it into the chamber 42. The solution 14 is sprayed through a nozzle (not shown) to cause the solution to at least partially atomize. The spraying of the solution 14 causes the chlorine dioxide to depart from the solution 14 substantially in proportion to the concentration originally dissolved in the solution 14. The released chlorine dioxide gas travels through the pathway of the chamber 42 to the gas monitor or sensor 46 where the concentration or amount of chlorine dioxide released from the solution 14 is measured. The remainder of the sprayed solution 14 will flow through the chamber back toward the reservoir 18.

The measured concentration of chlorine dioxide is communicated to the controller 30. The controller compares the measured concentration to predetermined threshold values. If the concentration is below the threshold value, the controller causes additional chlorine dioxide to be added to the solution 14. The pump 26 operates to deliver the chlorine dioxide to the solution 14. The controller can cause a predetermined amount of chlorine dioxide to be delivered or it can cause the chlorine dioxide to be continuously delivered until the sensed amount of chlorine dioxide within the solution exceeds a threshold limit. The type of delivery and/or the amount of chlorine dioxide delivered can depend upon the interval at which the concentration is tested, the location at which chlorine dioxide is delivered to the solution, the load on the solution, and the like.

Other gas release devices can be used. For example, other gas release devices can include an impinger, a sonicator, a shaker, a mixer, a heater, a vacuum or Vacutainer® (trademark of Becton, Dickinson and Company), as well as other devices that result in the transfer of chlorine dioxide from solution into an ambient gas phase.

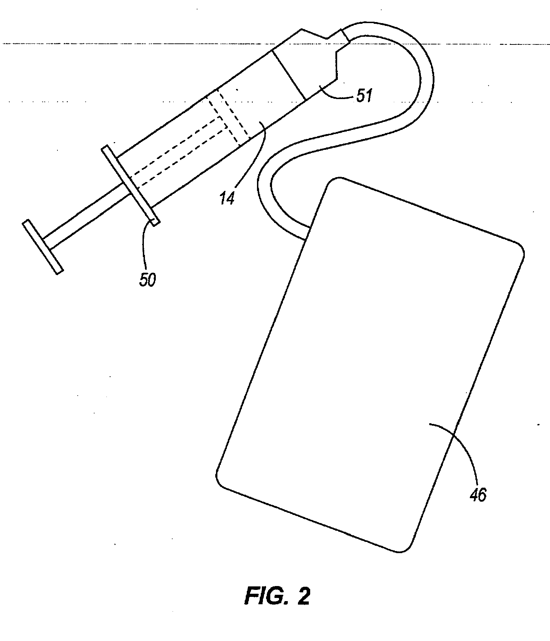

FIG. 2 illustrates an embodiment of a gas separation device, in accordance with the present invention. As shown in this figure, a syringe 50 is used as the separation device. Specifically, a known volume of solution 14 or a sample can be drawn into the volumetric syringe to partially fill the syringe. The syringe can then be removed from fluid communication with the solution 14 within the reservoir 18 and the plunger of the syringe can be further drawn to add a known volume of air 51 to the syringe 50. Preferably, the air should not contain chlorine dioxide or should be substantially free from chlorine dioxide before it is drawn into the syringe. The syringe can then be shaken for a known, brief period of time to cause the chlorine dioxide to separate from the solution 14. The syringe can then be coupled to the gas monitor 46 and the plunger on the syringe can then be actuated to drive the air and the released chlorine dioxide to the gas monitor 46. Accordingly, the concentration of the chlorine dioxide can be measured.

Although a syringe is illustrated and described, other devices or combination of devices able to extract and hold known volumes of fluid can be used. For example, substantially any sealable container can be used to contain the solution and separate the chlorine dioxide. For example, the solution could be placed in a sealed test tube and shaken. Then, a syringe with a needle could be used to capture the released gas. Additionally, a sample can be placed in a container under vacuum (i.e., Vacutainer) and the vacuum can cause the gas to release from the solution.

In the embodiment shown in FIG. 2, precision of air and solution volume, as well as shake time can impact the resultant measurement of chlorine dioxide. Specifically, as the volume of air within the syringe increases, the indicated concentration of chlorine dioxide can decrease. Conversely, as the amount of solution 14 increases, the indicated concentration of chlorine dioxide can increase. Furthermore, the shake time is important because too little time will not allow the gas to escape from the solution and too much time will allow the gas to re-enter the solution. Finally, with some gas monitoring equipment, the rate in which gas is discharged to the monitoring device is important. Specifically, flow rates greater than one liter per minute can lead to imprecise measurements with some devices. One particular useful set of experimental conditions are as follows:

| | |
|---|---|
| Solution drawn into the syringe: | 10 ml |
| Air drawn into the syringe: | 50 ml |
| Shake time: | 5-10 seconds |
| Air displacement from syringe: | 10 ml/sec. |

Other sets of conditions can be used as well. The accuracy of measurements under other conditions can be determined experimentally and converted if needed by a determined conversion factor.

Experimental results relating to the embodiment shown in Fig. 2 are described below in Table 1. The following procedure was followed to create a set of control data (i.e., test results in the absence of suspended solids, turbidity, or color). An aliquot of the ClO₂ concentrate was introduced into 100 ml of deionized water. A 10 ml aliquot of the ClO₂ mixture was tested using the HACH pocket colorimeter using the DPD method. A 10 ml aliquot of the ClO₂ mixture was aspirated by the 60 ml syringe. The syringe was held upright and 50 ml of air was drawn into the syringe. The contents of the syringe were shaken vigorously for 8 seconds. The outlet of the syringe was connected to the iTX via the cap and tubing. The barrel of the syringe was plunged as to displace the air from the syringe into the iTX at an approximate rate of 10 ml/sec. The peak reading of the iTX was recorded. Then the 10 ml aliquot left in the syringe was tested using the HACH pocket colorimeter using the DPD method.

Test results at various concentrations of chlorine dioxide are provided below:

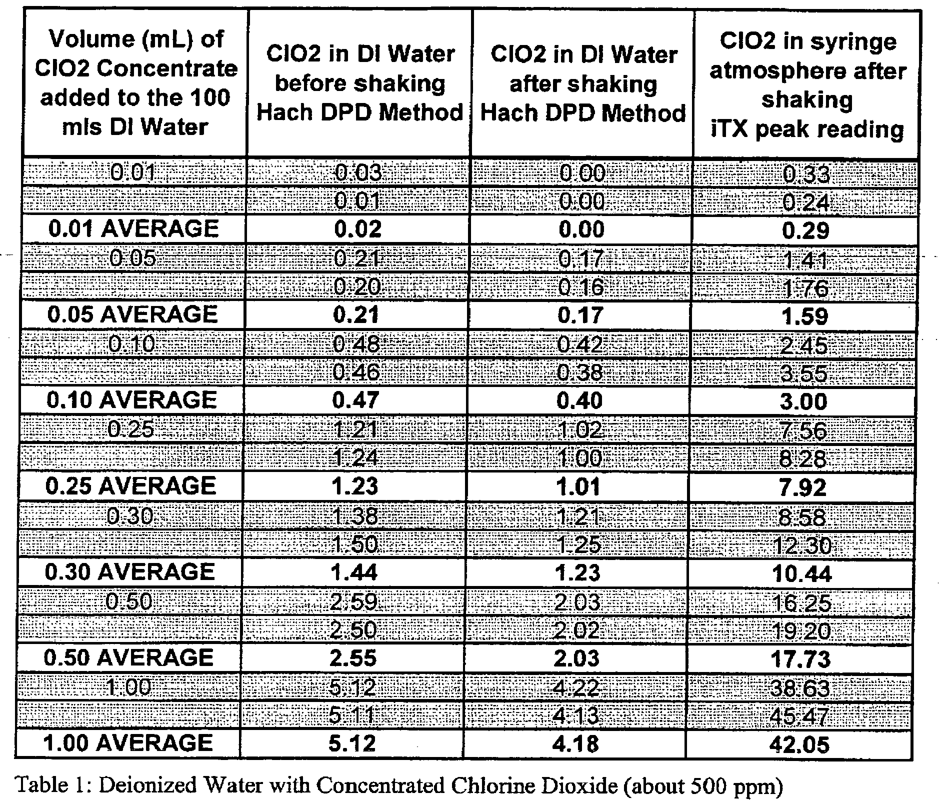

As illustrated above, the amount of chlorine dioxide detected by the iTX peak reading is generally proportional to concentration of chlorine dioxide originally in the water. For example, the average iTX peak reading for the 0.05 average chlorine dioxide solution is generally five times greater than the average iTX peak reading for the 0.01 average chlorine dioxide solution. This proportional relationship generally holds true for all of the test data.

This control data can then be used to determine the exact correlation between the iTX peak reading and the actual concentration in the solution. Specifically, a graph or equation can be used to correlate the measured chlorine dioxide in the air to the amount originally in the solution. The original amount of chlorine dioxide in the solution can be determined by using the HACH DPD method.

Additional data was produced for the embodiment shown in Fig. 2. However, this test was conducted with a solution having suspended solids, turbidity, and/or color. Specifically, tomato juice was added to a dioionized water solution similar to the control group. The following procedure was followed for this test:
An aliquot of the ClO₂ concentrate was introduced into 100 ml of 0.16% v/v tomato juice. A 10 ml aliquot of the ClO₂ and juice mixture was aspirated by the 60 ml syringe. The syringe was held upright and 50 ml of air was drawn into the syringe. The contents of the syringe were shaken vigorously for 8 seconds. The outlet of the syringe was connected to the iTX via the cap and tubing. The barrel of the syringe was plunged as to displace the air from the syringe into the iTX at an approximate rate of 10 ml/sec. The peak reading of the iTX was recorded. Then the 10 ml aliquot left in the syringe was tested using the HACH pocket colorimeter using the DPD method.

The results of this experiment are shown below in Table 2.

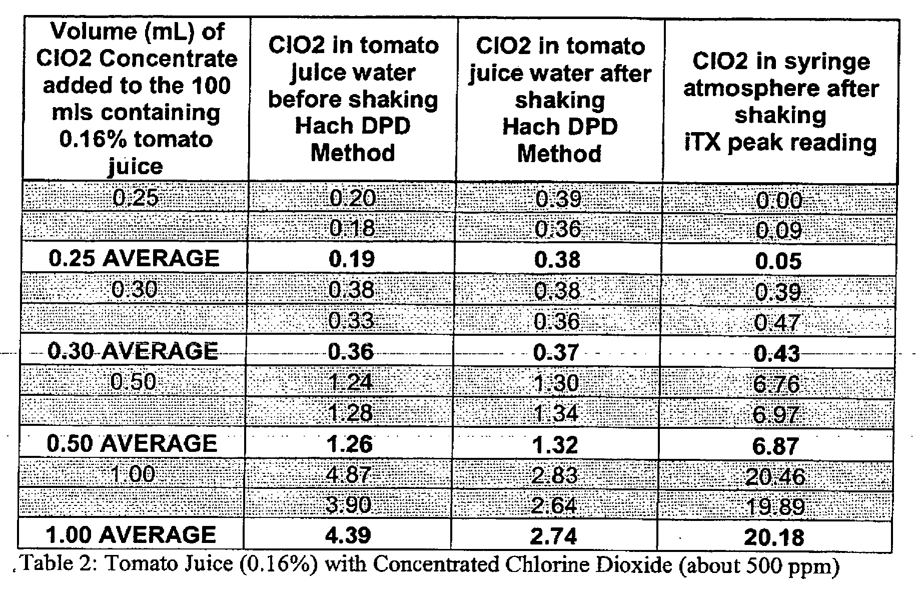

The test results shown in Table 2 illustrate how unreliable the Hach DPD method and other colorimeter methods can be in the presence of solids, color, and turbidity. For example, in the first set of results (i.e., 0.25), the Hach DPD method appears to indicate that the amount of chlorine dioxide in the solution increased after testing, which is erroneous. This appears to illustrate that the color of the solution or the solids in the solution are interfering with the reading.

Using the iTX peak reading data and the control data discussed above, the actual concentration of chlorine dioxide in the solution can be determined (or at least closely approximated). Specifically, the reading acquired in Table 2 can be inserted into a graph or equation prepared from the control data to determine the actual concentration (or a close approximation) in the solution.

## Claims

1. A device for controlling the concentration of chlorine dioxide in an aqueous solution (14) contained within a reservoir, the device comprising:
a gas monitoring device (46) for measuring chlorine dioxide gas;
a controller (30) in communication with the gas monitoring device;
a source of chlorine dioxide (22) coupled to the reservoir and selectively dispensed into the reservoir via control of the controller; and
a gas release device (34) in communication with the gas monitoring device, the gas release device configured to at least temporarily receive a portion of the aqueous solution from the reservoir and to cause the chlorine dioxide within the portion of the aqueous solution to transfer from the solution to an ambient gas phase, the gas release device having a chamber (42) adapted to capture the ambient gas phase of the chlorine dioxide and direct the chlorine dioxide toward the gas monitoring device;
**characterized in that** the gas release device comprises a selectively sealable container (50) adapted to separate the chlorine dioxide from the solution.

2. The device of claim 1, wherein the sealable container (50) is a syringe adapted to have a known volume of solution and air and to be shaken to separate the chlorine dioxide from the solution.

3. The device of claim 1, wherein the sealable container (50) is a container to be placed under a vacuum to release the chlorine dioxide from the solution.

4. The device of claim 1, wherein the controller (30) is configured to compare the measured value of chlorine dioxide to a predetermined value and to cause chlorine dioxide to be dispensed into the solution in response to the measured value being below the predetermined value.

5. The device of claim 1, wherein the aqueous solution (14) containing the chlorine dioxide includes at least one of turbidity, color and suspended solids.

6. A method of measuring and controlling the concentration of chlorine dioxide of an aqueous solution (14) containing chlorine dioxide being present in a reservoir, the method comprising:
withdrawing a sample of the aqueous solution from the reservoir using a selectively sealable container (50);
liberating at least a portion of the chlorine dioxide from the sample of the aqueous solution;
directing the chlorine dioxide driven from the aqueous solution to a gas monitor (46);
measuring the amount of chlorine dioxide driven from the aqueous solution with the gas monitor; and
communicating the measured chlorine dioxide concentration to a controller (30) in communication with the gas monitor.

7. The method of claim 6, further comprising:
comparing the measured chlorine dioxide concentration to a predetermined threshold level; and
causing the controller (30) to add additional chlorine dioxide to the aqueous solution (14) in response to the measured value being below the predetermined threshold level.

8. The method of claim 6, wherein withdrawing a sample of aqueous solution from the reservoir further comprises withdrawing a selected volume of sample from the reservoir with a syringe.

9. The method of claim 8, further comprising:
drawing a select volume of air into the syringe; and
shaking the syringe for a predetermined period of time to liberate at least a portion of the chlorine dioxide from the sample of the aqueous solution.

10. The method of claim 6, wherein liberating at least a portion of the chlorine dioxide from the sample of the aqueous solution further comprises applying a vacuum to the selectively sealable container (50) containing the sample of the aqueous solution.

11. The method of claim 6, wherein the aqueous solution (14) containing the chlorine dioxide includes at least one of turbidity, color and suspended solids.

## Patentansprüche

1. Eine Vorrichtung zum Kontrollieren der Konzentration von Chlordioxid in einer wässrigen Lösung (14), die in einem Behälter enthalten ist, wobei die Vorrichtung umfasst:
- eine Gas-Überwachungsvorrichtung (46) zum Messen von Chlordioxid-Gas;
- eine Steuereinheit (30) in Verbindung mit der Gas-Überwachungsvorrichtung;
- eine Chlordioxid-Quelle (22), die mit dem Behälter verbunden ist, und selektiv über das Steuern der Steuereinheit in den Behälter dispensiert ist; und
- eine Gas-Abgabevorrichtung (34) in Verbindung mit der Gas-Überwachungsvorrichtung, wobei die Gas-Abgabevorrichtung so konfiguriert ist, dass sie mindestens zeitweise einen Teil der wässrigen Lösung aus dem Behälter aufnimmt und dass sie das Chlordioxid innerhalb des Teils der wässrigen Lösung dazu bringt, aus der Lösung in eine Umgebungsgasphase überzugehen, wobei die Gas-Abgabevorrichtung eine Kammer (42) hat, die angepasst ist, um die Umgebungsgasphase des Chlordioxids einzufangen und das Chlordioxid in Richtung der Gas-Überwachungsvorrichtung zu lenken;
**dadurch gekennzeichnet, dass** die Gas-Abgabevorrichtung einen selektiv siegelbaren Behälter (50) umfasst, der angepasst ist, um das Chlordioxid von der Lösung zu trennen.

2. Die Vorrichtung nach Anspruch 1, wobei der siegelbare Behälter (50) eine Spritze ist, die angepasst ist, um ein bekanntes Volumen an Lösung und Luft zu haben, und um geschüttelt zu werden, um das Chlordioxid von der Lösung zu trennen.

3. Die Vorrichtung nach Anspruch 1, wobei der siegelbare Behälter (50) ein Behälter ist, der unter Vakuum gesetzt wird, um das Chlordioxid von der Lösung zu trennen.

4. Die Vorrichtung nach Anspruch 1, wobei die Steuereinheit (30) konfiguriert ist, um den gemessenen Wert an Chlordioxid mit einem vorherbestimmtem Wert zu vergleichen, und um das Chlordioxid dazu zu bringen, als Antwort auf den gemessenen Wert, der unterhalb des vorherbestimmten Werts ist, in die Lösung zu dispensieren.

5. Die Vorrichtung nach Anspruch 1, wobei die wässrige Lösung (14), die das Chlordioxid enthält, mindestens eines von Trübung, Farbe und suspendierten Feststoffen hat.

6. Ein Verfahren zum Messen und Kontrollieren der Konzentration von Chlordioxid einer wässrigen Chlordioxid-haltigen Lösung (14), die in einem Behälter vorliegt, wobei das Verfahren umfasst:
- Entnehmen einer Probe der wässrigen Lösung aus dem Behälter unter Verwendung eines siegelbaren Behälters (50);
- Freisetzen mindestens eines Teils des Chlordioxids aus der Probe der wässrigen Lösung;
- Leiten des Chlordioxids, das aus der wässrigen Lösung getrieben wurde, zu einer Gasüberwachung (46);
- Messen der Menge an Chlordioxid, das aus der wässrigen Lösung getrieben wurde, mit der Gasüberwachung; und
- Übermitteln der gemessenen Chlordioxid-Konzentration an eine Steuereinheit (30) in Verbindung mit der Gasüberwachung.

7. Das Verfahren nach Anspruch 6, das weiter umfasst:
- Vergleichen der gemessenen Chlordioxid-Konzentration mit einem vorherbestimmten Schwellenwert; und
- Dazu Bringen der Steuereinheit (30), dass zusätzliches Chlordioxid in die wässrige Lösung (14) gegeben wird als Antwort auf den gemessenen Wert, der unterhalb des vorherbestimmten Schwellenwerts ist.

8. Das Verfahren nach Anspruch 6, wobei das Entnehmen einer Probe der wässrigen Lösung aus dem Behälter weiter das Entnehmen eines ausgewählten Volumens einer Probe aus dem Behälter mit einer Spritze umfasst.

9. Das Verfahren nach Anspruch 8, das weiter umfasst:
- Aufziehen eines ausgewählten Volumens an Luft in die Spritze; und
- Schütteln der Spritze über einen vorherbestimmten Zeitraum, um mindestens einen Teil des Chlordioxids aus der Probe der wässrigen Lösung freizusetzen.

10. Das Verfahren nach Anspruch 6, wobei das Freisetzen mindestens eines Teils des Chlordioxids aus der Probe der wässrigen Lösung weiter das Anlegen eines Vakuums an den selektiv siegelbaren Behälter (50), der die Probe der wässrigen Lösung enthält, umfasst.

11. Das Verfahren nach Anspruch 6, wobei die wässrige Lösung (14), die das Chlordioxid enthält, mindestens eines von Trübung, Farbe und suspendierten Feststoffen beinhaltet.

## Revendications

1. Dispositif de régulation de la concentration en dioxyde de chlore dans une solution aqueuse (14) contenue dans un réservoir, le dispositif comprenant :
un dispositif de contrôle de gaz (46) servant à doser le dioxyde de chlore gazeux ;
un dispositif de régulation (30) en communication avec le dispositif de contrôle de gaz ;
une source de dioxyde de chlore (22) couplée au réservoir et introduite sélectivement dans le réservoir via la commande du dispositif de régulation ; et
un dispositif de libération de gaz (34) en communication avec le dispositif de contrôle de gaz, le dispositif de libération de gaz étant conçu pour recevoir au moins temporairement une partie de la solution aqueuse provenant du réservoir et pour permettre au dioxyde de chlore se trouvant dans la partie de la solution aqueuse d'être transféré de la solution vers une phase gazeuse ambiante, le dispositif de libération de gaz comportant une chambre (42) qui est capable de piéger la phase gazeuse ambiante du dioxyde de chlore et de diriger le dioxyde de chlore en direction du dispositif de contrôle de gaz ;
**caractérisé en ce que** le dispositif de libération de gaz comprend un récipient pouvant être hermétiquement fermé de manière sélective (50) qui est capable de séparer le dioxyde de chlore de la solution.

2. Dispositif selon la revendication 1, dans lequel le récipient pouvant être hermétiquement fermé (50) est une seringue conçue pour contenir un volume connu de solution et d'air et pour être agitée de manière à séparer le dioxyde de chlore de la solution.

3. Dispositif selon la revendication 1, dans lequel le récipient pouvant être hermétiquement fermé (50) est un récipient à placer sous vide de manière à libérer le dioxyde de chlore de la solution.

4. Dispositif selon la revendication 1, dans lequel le dispositif de régulation (30) est conçu pour comparer la valeur mesurée de dioxyde de chlore à une valeur prédéterminée et pour permettre l'introduction de dioxyde de chlore dans la solution en réponse à une valeur mesurée inférieure à la valeur prédéterminée.

5. Dispositif selon la revendication 1, dans lequel la solution aqueuse (14) contenant le dioxyde de chlore présente au moins une caractéristique choisie parmi une turbidité, une couleur et des solides en suspension.

6. Procédé de dosage et de régulation de la concentration du dioxyde de chlore d'une solution aqueuse (14) contenant du dioxyde de chlore présente dans un réservoir, le procédé comprenant :
le prélèvement d'un échantillon de la solution aqueuse dans le réservoir au moyen d'un récipient pouvant être hermétiquement fermé de manière sélective (50) ;
la libération d'au moins une partie du dioxyde de chlore de l'échantillon de solution aqueuse ;
l'envoi du dioxyde de chlore retiré de la solution aqueuse vers un dispositif de contrôle de gaz (46) ;
le dosage de la quantité de dioxyde de chlore retirée de la solution aqueuse avec le dispositif de contrôle de gaz ; et
la communication de la concentration mesurée de dioxyde de chlore à un dispositif de régulation (30) en communication avec le dispositif de contrôle de gaz.

7. Procédé selon la revendication 6, comprenant en outre :
la comparaison de la concentration mesurée de dioxyde de chlore à un niveau seuil prédéterminé ; et
l'ajout par le dispositif de régulation (30) de dioxyde de chlore supplémentaire à la solution aqueuse (14) en réponse à une valeur mesurée inférieure au niveau seuil prédéterminé.

8. Procédé selon la revendication 6, dans lequel le prélèvement d'un échantillon de solution aqueuse dans le réservoir comprend en outre le prélèvement d'un volume sélectionné d'échantillon dans le réservoir avec une seringue.

9. Procédé selon la revendication 8, comprenant en outre :
l'aspiration d'un volume sélectionné d'air dans la seringue ; et
l'agitation de la seringue pendant une période de temps prédéterminée pour libérer au moins une partie du dioxyde de chlore de l'échantillon de solution aqueuse.

10. Procédé selon la revendication 6, dans lequel la libération d'au moins une partie du dioxyde de chlore de l'échantillon de solution aqueuse comprend en outre l'application d'un vide au récipient pouvant être hermétiquement fermé de manière sélective (50) contenant l'échantillon de solution aqueuse.

11. Procédé selon la revendication 6, dans lequel la solution aqueuse (14) contenant le dioxyde de chlore présente au moins une caractéristique choisie parmi une turbidité, une couleur et des solides en suspension.
